# EUROPEAN PATENT SPECIFICATION

(11) **EP 3 744 517 B1**
(45) Date of publication and mention of the grant of the patent: **29.11.2023**
(21) Application number: 19201692.1
(22) Date of filing: 07.10.2019
(51) Int. Cl.: B32B 3/26, B32B 5/18, B32B 5/22, B32B 27/08, B32B 27/18, B32B 27/20, B32B 27/30, B32B 27/32, B32B 27/36, F25B 23/00, F28F 13/18, F28F 21/06

(54) **COMPOSITE RADIATIVE COOLING FILM, COMPOSITE RADIATIVE COOLING FILM ASSEMBLY AND APPLICATION THEREOF**
VERBUNDSTRAHLUNGSKÜHLFOLIE, STRAHLUNGSKÜHLFOLIENANORDNUNG UND ANWENDUNG DAVON
FILM DE REFROIDISSEMENT PAR RADIATION COMPOSITE, ENSEMBLE FILM DE REFROIDISSEMENT PAR RADIATION COMPOSITE ET SON APPLICATION

(30) Priority: 31.05.2019 CN 201910468709
(43) Date of publication of application: 02.12.2020
(73) Proprietor: Ningbo Radi-Cool Advanced Energy Technologies Co., Ltd., Ningbo City, Zhejiang Province 315500 (CN); Ningbo Ruiling Advanced Energy Materials Institute Co., Ltd., Fenghua District Ningbo City Zhejiang 315500 (CN)
(72) Inventor: XU, Shaoyu, Ningbo City, Zhejiang 315500 (CN)
(74) Representative: Meyer-Dulheuer MD Legal Patentanwälte PartG mbB

(56) References cited:
- WO-A1-2017/151514
- WO-A1-2018/062541
- US-A1- 2011 042 052
- US-A1- 2019 086 164

## Description

### TECHNICAL FIELD

The present disclosure relates to the technical field of radiative cooling, and in particular, to a composite radiative cooling film, a composite radiative cooling film assembly and application thereof.

### BACKGROUND

Radiative cooling technology regarded as a means of temperature regulation without energy consumption can be practical, which will enable development of both environmental protection and energy utilization harmoniously and bring large changes in the energy field.

When the temperature of objects is above absolute zero or 0 Kelvin, an electromagnetic radiation will be generated from the objects. The radiation wavelength varies with materials, molecular structures and temperature of the objects. From the nature of radiation, when atoms or groups of the molecular structure jump from a high-energy vibration state to a low-energy vibration state, an infrared radiation in the wavelength range of 2.5 µm to 25 µm can be generated. Electromagnetic waves of different wavelengths can have different transmittances in the atmosphere as shown from analyses of transmission characteristics of the atmospheric spectrum by scientists. The electromagnetic waves with higher transmittance can be regarded as an atmospheric window, for example, in a wavelength range of 0.3 µm - 2.5 µm, in a wavelength range of 3.2 µm - 4.8 µm, in a wavelength range of 7 µm - 14 µm. The spectral transmission characteristics of the atmosphere are mainly determined by water vapor, carbon dioxide and ozone in the atmosphere. Changes of the amount of water vapor, carbon dioxide and ozone in the atmosphere will cause the transmittance to change correspondingly, but the distribution of the transmission spectrum will not change much. Therefore, thermal energy of the objects on the surface of the earth can be released through radiation and the thermal energy can be discharged into outer space through the atmospheric window in a form of electromagnetic waves ranging from 7 µm to 14 µm, achieving the purpose of self-cooling.

In the prior art, radiative cooling systems achieve passive cooling through polymers with higher emissivity. However, when relying solely on polymers for passive cooling, the cooling effect of the radiative cooling system is poor. Therefore, the cooling effect of the radiative cooling system needs to be further improved.
US 2011 004 205 2 A1 discloses the cooling material which comprises a first spectrally selective component that comprises particles. The particles are arranged for emission of radiation predominantly having a wavelength or wavelength range within an atmospheric window wavelength range in which the atmosphere of the earth has a reduced average absorption and emission compared with an average absorption and emission in an adjacent wavelength range. The cooling material further comprises a second spectrally selective component having a property that distinguishes the second spectrally selective component from the first spectrally selective component and facilitates at least one desired function of the cooling material.
WO 2017 151 514 A1 and US 2019 008 616 4 A1 disclose polymer-based selective radiative cooling structures which include a selectively emissive layer of a polymer or a polymer matrix composite material. Exemplary selective radiative cooling structures are in the form of a sheet, film or coating.
WO 2018 062 541 A1 discloses a laminate structure equipped with, in order from the side of an object to be cooled, a radiant cooling layer that includes a resin containing air bubbles and that emits far-infrared rays, and a heat-insulating layer that includes a resin containing air bubbles, has a porosity of 70% or greater, and has no more than eight air bubbles included in the lamination direction.

### SUMMARY

The present disclosure is to provide a composite radiative cooling film with great radiative cooling property, a composite radiative cooling film assembly and application thereof.

The invention is defined in the claims.

The present disclosure provides a composite radiative cooling film including a top layer and a reflective layer disposed below the top layer. A material of the top layer can include at least one polymer and the at least one polymer can have an emissivity that is greater than or equal to 80% in a wavelength range of 7 µm to 14 µm.

The top layer can include a first emissive layer adjacent to the reflective layer and a second emissive layer away from the reflective layer. A material of the first emissive layer can include a first polymer. The first emissive layer can further include a plurality of first pores. The plurality of first pores can be distributed in the first emissive layer. A material of the second emissive layer can include a second polymer and the second emissive layer can further include a plurality of second pores. The plurality of second pores can be distributed in the second emissive layer. A pore size of the plurality of first pores can be in a range of 1 µm to 20 µm and a pore size of the plurality of second pores can be in a range of 1 nm to 200 nm.

In one embodiment, a volume fraction of the plurality of first pores in the first emissive layer can be in a range of 1% to 20%, and a volume fraction of the plurality of second pores in the second emissive layer can be in a range of 1% to 20%.

The first emissive layer includes a first additive, and the first additive can be embedded in at least part of the plurality of first pores, and the second emissive layer includes a second additive, and the second additive can be embedded in at least part of the plurality of second pores.

In one embodiment, a particle size of the first additive can be in a range of 1 µm to 20 µm.

A particle size of the second additive can be in a range of 1 nm to 200 nm.

In one embodiment, a volume fraction of the first additive in the first emissive layer can be in a range of 0% to 20%, and a volume fraction of the second additive in the second emissive layer can be in the range of 0% to 20%.

In one embodiment, the first additive and the second additive respectively can include an inorganic filler such as glass beads, ceramic beads, silicon oxide particles, silicon carbide particles, silicon nitride particles, barium sulfate particles, calcium carbonate particles, or a combination thereof.

The first additive and the second additive, respectively, can include an organic filler such as a polymer containing C-O functional group, a polymer containing C-Cl functional group, a polymer containing C-F functional group, a polymer containing C-N functional group, a polymer containing C-Si functional group, a polymer containing Si-O functional group, or a combination thereof.

In one embodiment, the organic filler can be polyethylene terephthalate (PET), polybutylene terephthalate (PBT), polyethylene naphthalate (PEN), polycarbonate (PC), polyvinyl chloride (PVC), polymethyl methacrylate (PMMA), polyvinylidene fluoride (PVDF), teflon (PTFE), fluorinated ethylene propylene (FEP), polydimethylsiloxane (PDMS), polyurethane (PU), or a combination thereof. In one embodiment, the first polymer can be poly-4-methyl-pentene (TPX), poly-4-methyl-1-pentene (PMP), polyethylene (PE), polypropylene (PP), polystyrene (PS), or a combination thereof, and the second polymer can be acrylic resin, polyurethane resin, fluorine resin, or a combination thereof.

The embodiment below does not form part of the claimed invention, the first additive and the second additive can respectively include an organic filler such as poly-4-methyl-pentene, poly-4-methyl-1-pentene, polyethylene, polypropylene, polystyrene, or a combination thereof.

In one embodiment, the first polymer can be a polymer containing C-O functional group, a polymer containing C-Cl functional group, a polymer containing C-F functional group, a polymer containing C-N functional group, a polymer containing C-Si functional group, a polymer containing Si-O functional group, or a combination thereof.

In one embodiment, the first polymer can include polyethylene terephthalate (PET), polybutylene terephthalate (PBT), polyethylene naphthalate (PEN), polycarbonate (PC), polyvinyl chloride (PVC), polymethyl methacrylate (PMMA), polyvinylidene fluoride (PVDF), teflon (PTFE), fluorinated ethylene propylene (FEP), polydimethylsiloxane (PDMS), polyurethane (PU), or a combination thereof.

In one embodiment, a plurality of convex portions or bumps can be distributed on a side surface of the second emissive layer away from the first emissive layer.

In one embodiment, a height of the plurality of convex portions can be in a range of 1 µm to 100 µm.

In one embodiment, a thickness of the first emissive layer can be in a range of 10 µm to 300 µm, and a thickness of the second emissive layer can be in a range of 5 µm to 150 µm.

In one embodiment, the reflective layer can include a metal reflective layer, and a material of the metal reflective layer can include gold, silver, aluminum, copper, zinc, or a combination thereof.

In one embodiment, the metal reflective layer can include a first metal reflective layer adjacent to the top layer and a second metal reflective layer away from the top layer. A material of the first metal reflective layer can be the same as or different from that of the second metal reflective layer. A thickness of the first metal reflective layer can be in a range of 5 nm to 200 nm and a thickness of the second metal reflective layer can be in a range of 5 nm to 200 nm. In another embodiment, a thickness of the first metal reflective layer can be in a range of 5 nm to 150 nm and a thickness of the second metal reflective layer can be in a range of 5 nm to 150 nm.

In one embodiment, the metal reflective layer can further include an intermediate layer disposed between the first metal reflective layer and the second metal reflective layer.

In one embodiment, the reflective layer can include a resin reflective layer and the resin reflective layer can include a plurality of third pores.

In one embodiment, a pore size of the plurality of third pores can be in a range of 0.2 µm to 20 µm.

In one embodiment, the resin reflective layer can include a first resin reflective layer, a second resin reflective layer, and a third resin reflective layer which are sequentially arranged, and the plurality of third pores can be distributed in the second resin reflective layer.

In one embodiment, a volume fraction of the plurality of third pores in the second resin reflective layer can be in a range of 2% to 30%.

In one embodiment, a thickness of the resin reflective layer can be in a range of 25 µm to 300 µm.

In one embodiment, a material of the resin reflective layer can include poly-4-methylpentene (TPX), polyethylene terephthalate (PET), polybutylene terephthalate (PBT), polyethylene naphthalate (PEN), acrylonitrile butadiene styrene copolymer (ABS), polystyrene (PS), polypropylene (PP), polycarbonate (PC), or a combination thereof.

In one embodiment, the reflective layer can include a metal reflective layer adjacent to the top layer and a resin reflective layer away from the top layer.

The present disclosure further provides a composite radiative cooling film assembly. The composite radiative cooling film assembly can be formed by the composite radiative cooling film and a substrate. The reflective layer of the composite radiative cooling film can be disposed on a surface of the substrate.

In one embodiment, the substrate can be metal, plastic, rubber, asphalt, a waterproof material, concrete, cement, textile, woven fabric, wood, ceramic tile, glass product, an organic synthetic material, or a combination thereof.

The present disclosure further provides a use of the composite radiative cooling film, comprising: disposing the composite radiative cooling film on a heat dissipating body, and thermally communicating the composite radiative cooling film with the heat dissipating body.

Compared with the prior art, the present disclosure has the following advantages. The emissivity of the top layer in the wavelength range of 7 µm - 14 µm can be greatly improved through matching of the plurality of first pores and the plurality of second pores, so that the radiative cooling effect of the composite radiative cooling film can be improved. In detail, the plurality of pores with different pore sizes in the polymers can greatly improve the passive cooling effect. On one hand, the plurality of first pores formed in the first polymer and the plurality of second pores formed in the second polymer can have a high reverse heat dissipation to direct and scatter sunlight. On the other hand, surface plasmon resonance can be generated between the surface of the plurality of first pores and the first polymer and between the surface of the plurality of second pores and the second polymer, and the generated surface plasmon resonance can be in a wavelength range of 7 µm to 14 µm of the atmospheric window. Therefore, a combination of the first emissive layer, the second emissive layer, and the reflective layer can have a high reflectivity in the solar spectrum and a high emissivity in the thermal spectrum, and such a structure can reduce the temperature of a substrate, device, structure or object under the composite radiative cooling film to achieve the passive radiative cooling effect.

The advantages of the present invention will be further illustrated in the following description.

### BRIEF DESCRIPTION OF THE DRAWINGS

FIG. 1 is a cross-sectional view of a composite radiative cooling film in a first embodiment of the present disclosure.
FIG.2 is a cross-sectional view of another composite radiative cooling film in a second embodiment of the present disclosure.
FIG.3 is a cross-sectional view of another composite radiative cooling film in a third embodiment of the present disclosure.
FIG.4 is a cross-sectional view of another composite radiative cooling film in a fourth embodiment of the present disclosure.
FIG. 5 is a graph showing temperature changing over time in models A, B, and C in the present disclosure, the embodiment concerned do not form part of the claimed invention.
FIG. 6a is a schematic view of temperature measuring points H1 and I1 at the center of the water in the water tanks H and I.
FIG. 6b is a graph showing temperature changes of the temperature measuring points H1 and I1 inside the water tank and environmental or ambient temperature changes in one embodiment.

In the drawings, 1 represents a top layer, 11 represents a first emissive layer, 12 represents a second emissive layer, 121 represents a convex portion, 2 represents a reflective layer, 21 represents a metal reflective layer, 211 represents a first metal reflective layer, 212 represents a second metal reflective layer, 213 represents an intermediate layer, 22 represents a resin reflective layer, 220 represents a third pore, 221 represents a first resin reflective layer, 222 represents a second resin reflective layer, and 223 represents a third resin reflective layer.

### DETAILED DESCRIPTION

"Solar radiation" in the present disclosure mainly refers to electromagnetic radiation having a wavelength of about 300 nm to about 2.5 µm.

"Reflectivity" of a material or a structure in the present disclosure is a fraction of any incident electromagnetic radiation reflected from a surface of the material or the structure. A perfect reflector can be defined as having a reflectivity of 1 and a perfect absorber can be defined as having a reflectivity of zero. A high reflectivity in the present disclosure means that the material or structure has a reflectivity greater than about 80% within a prescribed wavelength range.

"Emissivity" of a material or structure in the present disclosure is an ability of emitting energy in the form of electromagnetic radiation. A perfect blackbody emitter can be defined as having an emissivity of 1 and a perfect non-emitter can be defined as having an emissivity of zero. A high emissivity in the present disclosure means that the material or structure has an emissivity greater than about 80% within a prescribed wavelength range.

"Transmittance" of a material or structure in the present disclosure means a ratio of electromagnetic waves transmitted through the material or structure within a prescribed wavelength range. An opaque material or structure can be defined as having a transmission of zero. A high transmittance in the present disclosure means that the material or structure has a transmittance of greater than about 80% within a prescribed wavelength range.

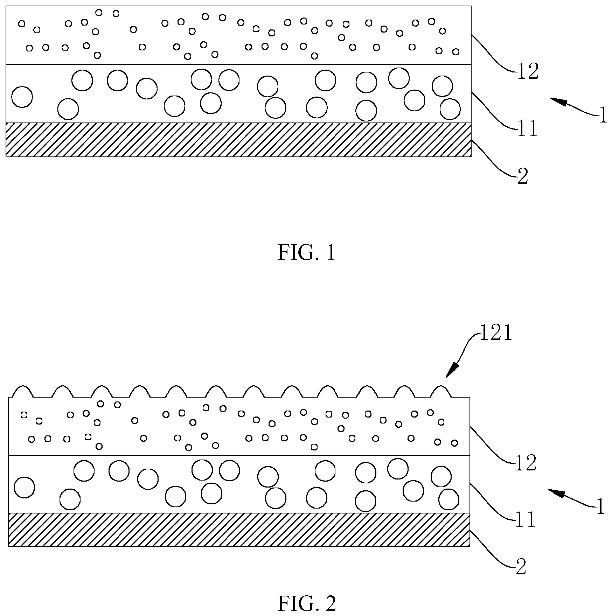

The present disclosure provides a composite radiative cooling film in an embodiment. Referring to FIGs. 1-4, the composite radiative cooling film can include a top layer 1 and a reflective layer 2 disposed under the top layer 1. A material of the top layer 1 can include at least one polymer having an emissivity of equal to or greater than 80% in the wavelength range from 7 µm to 14 µm. The reflective layer 2 can have a high reflectivity for at least one part of the solar radiation. The top layer 1 can include a first emissive layer 11 adjacent to the reflective layer 2 and a second emissive layer 12 away from the reflective layer 2. A material of the first emissive layer 11 can include a first polymer. The first polymer can further include a plurality of first pores. The plurality of first pores can be distributed in the first emissive layer. A material of the second emissive layer 12 can include a second polymer. The second polymer can further include a plurality of second pores. The plurality of second pores can be distributed in the second emissive layer. A pore size of the plurality of first pores can be in a range of 1 µm to 20 µm and a pore size of the plurality of second pores can be in a range of 1 nm to 200 nm.

A cost-effective infrared phonon polarization resonant polymer material and micro/nano scale pores formed in a polymer layer can greatly improve the passive cooling effect. The micro/nano scale pores can regulate and enhance a spectrum of infrared radiation by a size effect. On one hand, the plurality of first pores formed in the first polymer and the plurality of second pores formed in the second polymer can have a high reverse heat dissipation to direct and scatter sunlight. On the other hand, surface plasmon resonance can be generated between the surface of the plurality of first pores and the first polymer and between the surface of the plurality of second pores and the second polymer, and the generated surface plasmon resonance can be in a wavelength range of 7 µm to 14 µm of the atmospheric window. Due to both the first polymer and the second polymer having an emissivity of not less than 80% in the wavelength range of 7 µm to 14 µm and are configured to emit heat radiation associated with the generated surface plasmon resonance, the first polymer including the plurality of first pores and the second polymer including the plurality of second pores can have a high emissivity in the thermal spectrum, and such a structure can reduce the temperature of a substrate, device, structure or object under the composite radiative cooling film to achieve the passive radiative cooling effect.

The emissive layer can generate one or more Mie resonances that can penetrate the atmospheric window band (7 µm - 14 µm). Based on good heat absorption properties between the polymer and the pores, the first emissive layer and the second emissive layer can have high absorptance in the thermal spectrum. So, the first emissive layer including pores and the second emissive layer including pores can be good emitters of thermal radiation, which can further enhance the emissivity of the top layer 1, such that the top layer 1 has excellent radiative cooling property.

Moreover, two kinds of pores with different pore sizes are layered, the pores with different pore sizes have different properties of radiative cooling, and the plurality of first pores with larger pore size are formed in the first polymer located inner side. The plurality of second pores with smaller pore size are formed in the second polymer located outer side. Since the wavelength range of the atmospheric window is mainly in the range of 7 µm to 14 µm, the first emissive layer including the plurality of first pores (having the pore size of 1 µm to 20 µm) is formed on the inner side and plays a main role in atmospheric window emissivity, and the second emissive layer including the plurality of second pores (having the pore size of 1 nm to 200 nm) is formed on the outer side to assist in enhancing the atmospheric window emissivity of the composite radiative cooling film. The local surface phonon generated by Mie scattering can enhance infrared radiation. Specifically, Mie scattering can occur when pore size of the plurality of first pores in the first emissive layer or the plurality of second pores in the second emissive layer is comparable to the wavelength of the radiation. Such scattering can be mainly caused by the plurality of first pores in the first emissive layer or the plurality of second pores in the second emissive layer. The intensity of Mie scattering is inversely proportional to the square of the wavelength. The directivity of Mie scattering is more obvious and the scattering is stronger in a forward direction of the light than in a backward direction of the light.

It should be mentioned that, in the various drawings of the present disclosure, the thickness of each layer is schematically illustrated, and does not mean that each layer should have the relative thickness shown in the figure. The shape, pore size, density, and the likeness of the pores in each layer are all schematically illustrated and the shape, pore size, density, and the likeness of the pores are not limited to what is shown in the drawings.

In some embodiments, a volume fraction of the plurality of first pores in the first emissive layer 11 can be in a range of 1% to 20%, and a volume fraction of the plurality of second pores in the second emissive layer 12 can be in a range of 1% to 20%.

The volume fraction of the plurality of first pores in the first emissive layer 11 can be in a range of 1% to 10%, and the volume fraction of the plurality of second pores in the second emissive layer 12 can be in a range of 1% to 8%.

In some embodiments, the first emissive layer 11 can further include a first additive dispersed in the first emissive layer 11 and at least partially embedded in the plurality of first pores. The first additive may all or partially fill the plurality of first pores. In other words, at least one part of the plurality of first pores in the first emissive layer 11 can accommodate the first additive, and the first additive may fill the plurality of first pores or may not fill the plurality of first pores.

A particle size of the first additive can be in a range of 1 µm to 20 µm, and the first additive can be glass beads, ceramic beads, silicon oxide, silicon carbide, silicon nitride, barium sulfate, calcium carbonate, or a combination thereof.

In some embodiments, the second emissive layer 12 can further include a second additive dispersed in the second emissive layer 12 and at least partially embedded in the plurality of second pores. The second additive may all or partially fill the plurality of second pores. A particle size of the second additive can be in a range of 1 nm to 200 nm, and the second additive can be glass beads, ceramic beads, silicon oxide, silicon carbide, silicon nitride, barium sulfate, calcium carbonate, or a combination thereof.

It is to be understood that the first additive and the second additive can respectively include an organic filler such as a polymer containing C-O functional group, a polymer containing C-Cl functional group, a polymer containing C-F functional group, a polymer containing C-N functional group, a polymer containing C-Si functional group, a polymer containing Si-O functional group, or a combination thereof.

The organic filler can be polyethylene terephthalate, polybutylene terephthalate, polyethylene naphthalate, polycarbonate, polyvinyl chloride, polymethyl methacrylate, polyvinylidene fluoride, teflon, fluorinated ethylene propylene, polydimethylsiloxane, polyurethane, or a combination thereof.

In other embodiments, the organic filler may also be poly-4-methyl-pentene, poly-4-methyl-1-pentene, polyethylene, polypropylene, polystyrene, or a combination thereof.

The plurality of first pores and/or the plurality of second pores may be filled with other additives. When the plurality of first pores and/or the plurality of second pores are filled with an additive having radiative cooling property, the additive particles can be embedded in at least one part of the plurality of first pores in the first polymer and/or at least one part of the plurality of second pores in the second polymer, such that the additive can further enhance the emissivity of the top layer 1.Besides, surface plasmon resonance can be generated between the pore surface (of the plurality of first pores or the plurality of second pores) and the polymer (the first polymer or the second polymer). The generated surface plasmon resonance can be in a wavelength range of 7 µm to 14 µm of the atmospheric window. The plurality of first pores and the plurality of second pores can enhance the emissivity of the top layer 1. The top layer 1 can have a high transmittance for solar radiation, and at least one part of the solar radiation passing through the top layer 1 can be reflected by the reflective layer 2, so that solar radiation reaching the other side of the reflective layer 2 can be reduced.

The embodiment below does not form part of the claimed invention, the plurality of first pores can be formed in the first emissive layer 11 of the top layer 1, and the plurality of first pores cannot be filled with any additive. The second emissive layer 12 can be formed with the plurality of second pores, and the second additive can be filled in at least part of the plurality of second pores.

The embodiment below does not form part of the claimed invention, the plurality of first pores can be formed in the first emissive layer 11 of the top layer 1, and the first additive can be filled in at least part of the plurality of first pores. The second emissive layer 12 can be formed with the plurality of second pores, and the plurality of second pores cannot be filled with any additive.

In another embodiment, the plurality of first pores can be formed in the first emissive layer 11 of the top layer 1, and the first additive can be filled in at least one part of the plurality of first pores. The second emissive layer 12 can be formed with the plurality of second pores, and the second additive can be filled in at least one part of the plurality of second pores.

The above embodiments are merely examples and do not limit filling between pores and additives.

It should be noted that when the additive is dispersed in the polymer, the polymer can form pores around the additive for accommodating the additive. The pores can have the same size as the additive, but it is also not excluded that due to various factors, the size of one part of the pores can be larger than the particle size of the additive. In addition, nano or micro scale additives may be difficult to disperse uniformly when added. Some additive particles may form small clusters, that is, the additives filled in the pores may be in the form of small clusters. Furthermore, after the additive is dispersed in the emissive layer, the pores can be formed around the additive by a biaxial stretching, a solvent evaporation process, or the like.

In detail, a process of the biaxial stretching can be as follows.

The process can include: transporting raw material → drying → melt extrusion → casting -> cooling -> longitudinal stretching (→ transverse stretching) -> traction -> winding.

In the process of biaxial stretching, longitudinal stretching and transverse stretching can also be carried out simultaneously in one step.

Methods of forming pores can be as follows.
(1) Liquid carbon dioxide can be uniformly mixed in the polymer, and the liquid carbon dioxide can be vaporized during heating to generate small pores, and pores with desired size can be formed by stretching.
(2) An organic or inorganic filler can be uniformly mixed in the polymer, and then pores can be formed around the organic or inorganic filler by stretching.

A process of solvent evaporation can be as follows.

The first polymer or the second polymer and water can be dissolved in an organic solvent (eg, acetone, ethyl acetate, butyl acetate, or tetrahydrofuran) and coated on a surface of an object or a substrate. After evaporating the organic solvent, the first polymer or the second polymer can be separated from water and micro and nano pores can be formed in the first polymer or the second polymer to form a first emissive layer or the second emissive layer.

When the number of pores in the first emissive layer or the second emissive layer formed by the polymer and the additive is less, methods of a single layer extrusion, multi-layer coextrusion, melt film formation, coating, or solution film formation may be employed to increase the number of pores.

A process of single layer extrusion, multi-layer coextrusion, or melt film formation can include: transporting raw material -> drying -> melt extrusion → casting → cooling → traction → winding.

The melt film forming method can include steps of casting and film blowing. The step of film blowing may include an upper blow air cooling process or a lower blow water cooling process.

A process of coating formation or solution formation may include: unwinding -> surface treatment→ coating → drying → winding. The surface treatment is mainly configured for removing dust and corona to maintain substrate cleanliness and improve adhesion. The coating can be a mixture of polymer and additive that is coated on a surface of any object.

In the present disclosure, the first additive having a larger particle size and the second additive having a smaller particle size are dispersed in different layers. The first additive is dispersed in the first polymer on the inner side, and the second additive is dispersed in the second polymer on the outer side such that the passive cooling effect of the top layer 1 is greatly improved compared with the prior art. In addition, since the second additive in the second emissive layer 12 is in nano scale, the second emissive layer 12 can have a hydrophobic property to improve a self-cleaning ability of the top layer 1.

A material of the first polymer may be the same as or different from that of the second polymer. A material of the first additive may be the same as or different from that of the second additive. The plurality of first pores and the plurality of second pores may be in the same layer of the polymer, and the first additive and the second additive may also be in the same layer of the polymer. A material of the first polymer and a material of the second polymer may be the same polymer or a combination of a plurality of polymers. The first additive or the second additive may be the same additive or a combination of a plurality of additives.

In one embodiment, the first polymer can be poly-4-methyl-pentene, poly-4-methyl-1-pentene, polyethylene, polypropylene, polystyrene, or a combination thereof. The second polymer is acrylic resin, polyurethane resin, fluorine resin, or a combination thereof. Since the second polymer has a great property of weather resistance, the weather resistance of the second emissive layer 12 can have a great property of weather resistance.

In one embodiment, the first polymer can be a polymer containing C-O functional group, a polymer containing C-Cl functional group, a polymer containing C-F functional group, a polymer containing C-N functional group, a polymer containing C-Si functional group, a polymer containing Si-O functional group, or a combination thereof. The first polymer can be polyethylene terephthalate, polybutylene terephthalate, polyethylene naphthalate, polycarbonate, polyvinyl chloride, polymethyl methacrylate, polyvinylidene fluoride, teflon, fluorinated ethylene propylene, polydimethylsiloxane, polyurethane, or a combination thereof.

Radiative cooling to the outer space during the day can be regarded as passive radiative cooling, in which most of the sunlight (wavelength range of 300 nm to 2500 nm) can be reflected and the heat can be transported to the outer space through the transparent atmospheric window in the form of infrared radiation. Radiative cooling films and coatings of polymers can have advantages of large-scale production, low cost, and suitability for large systems. However, there are few studies on nature of thermal emission of polymers and how to effectively select polymers for radiative cooling. Therefore, understanding the relationship between polymer functional groups and infrared thermal emissivity and solar absorptivity can effectively select polymers suitable for daytime radiative cooling.

It will be understood that the vibration of the functional groups can affect the infrared absorption and emission of the polymer. Different functional groups, such as O-H, C=O, C-Cl, have specific vibrational frequencies/wavelengths which may vary slightly depending on the polymer with the functional groups. In addition, the functional groups can have various vibration forms such as stretching vibration and bending vibration, and various vibration frequencies. Therefore, a polymer having a plurality of functional groups may have various vibration frequencies.

Generally, vibrational forms of functional groups in polymers can include stretching vibration, in-plane bending vibration, out-of-plane bending vibration, and deformation vibration. The stretching vibration can include symmetric stretching vibration and asymmetric stretching vibration. The in-plane bending vibration can include shear vibration and in-plane rocking. The out-of-plane bending vibration can include out-of-plane rocking and torsional vibration. The deformation vibration can include symmetric deformation vibration and anti-symmetric deformation vibration. The various functional groups along with their various vibrational forms will result in a large number of infrared absorption/emission peaks in the polymer.

The vibration regions and corresponding functional groups are listed in table 1. The vibration modes over a broad range of wavenumbers (4000 cm⁻¹ - 400 cm⁻¹) or wavelengths (2.5 µm - 25 µm) can be divided into several regions. At the larger wavenumber end (4000 cm¹ to 2500 cm⁻¹)/wavelength end (2.5 µm to 4 µm) is the stretching vibration region of the functional group of X-H (where X can represent C, O, N, etc.). The groups of C-H, O-H and N-H, etc. can be responsible for emission and absorption and the high stretching vibration frequency is due to the small mass and volume of these functional groups. Following the X-H stretching region is a triple bond region (2500 cm⁻¹ to 2000 cm⁻¹/2.5 µm to 4 µm) of functional groups of C≡C and C=N, which have relatively strong absorptivity because of their large force constants although their stretching vibration is weak. In the mid mediumwave number range (2000 cm⁻¹ to 1500 cm⁻¹)/wavelength range (4 µm to 6.7 µm), double bond functional groups such as C=C and C=O can have a higher absorptivity due to stretching vibration. A finger-print region (also referred to as a crowded region) is located further away and its wavenumber/wavelength range is 1500 cm⁻¹ to 600 cm⁻¹/6.7 µm to 16.7 µm. In the finger-print region, many functional groups can have strong absorption due to bending vibration, including C-Y groups (wherein Y represents a halogen element such as F, Cl, and Br), C-O group, C-N group, C-Si group, and Si-O group. At the far end of the infrared spectrum is a skeletal vibration region in which vibrations of heavy atoms and molecules are configured for infrared absorption and emission. Since the crowded region corresponding to the electromagnetic spectrum of 6.7 µm-16.7 µm covers the entire atmospheric window, most of the infrared emission of 7 µm-14 µm of a large amount of polymer can be directly transported to outer space without being absorbed by the atmosphere. So, the polymers including the functional groups of C-O, C-Cl, C-F, C-N, C-Si, and Si-O in the finger-print region can be used for radiative cooling in daytime. In addition, for further selecting the polymer, a solar absorption rate, a possibility of mass production, physical and chemical stability, durability, and application objectives need to be considered.

**Table 1 Vibration regions of functional groups in polymers**

| Vibration region | Functional group |
|---|---|
| X-H stretching vibration region (4000 cm⁻¹ - 2500 cm⁻¹) | C-H, O-H, N-H |
| Triple bond region (2500 cm⁻¹ - 2000 cm⁻¹) | C≡N, C≡C |
| Double bond region (2000 cm⁻¹ - 1500 cm⁻¹) | C=C, C=O, C=N |
| Finger-print region (crowded region, mainly bending vibration) (1500 cm⁻¹ - 600 cm⁻¹) | C-O, C-N, C-Cl, C-F, C-Si, Si-O |
| Skeletal vibration region (600 cm⁻¹ - 400 plus cm⁻¹) | Heavy atoms and molecules |

Based on the relationship between the functional groups of polymer and infrared thermal emissivity and between the functional groups of polymer and solar absorptivity, and the overlap of the atmospheric window (7 µm to 14 µm) and infrared spectrum of the functional groups in the fingerprint region, polymers having the specific functional groups are selected to achieve the radiative cooling effect below ambient temperature during the daytime in the present disclosure. If another solar reflective layer with higher reflectivity can be disposed on a back surface of the composite radiative cooling film made of these polymers, the radiative cooling effect will be much better.

It can be understood that in some embodiments, a good radiative cooling effect can be achieved by only the polymers and the reflective layer.

Referring to FIG. 2, in some embodiments, a plurality of convex portions 121 can be distributed on an outer surface of the second emissive layer 12. The plurality of convex portions 121 may be a plurality of micro convex ribs arranged in parallel or a plurality of micro convex dots arranged in an array. The plurality of convex portions 121 substantially covers the entire outer surface of the second emissive layer 12. A height of the plurality of convex portions 121 can be in a range of 1 µm to 100 µm. Preferably, the height of the plurality of convex portions 121 can be in a range of 10 µm to 100 µm. More preferably, the height of the plurality of convex portions 121 can be in a range of 50 µm to 100 µm. The plurality of convex portions 121 can enhance the emission property of the second emissive layer 12. A cross-section of the plurality of convex portions 121 may be in a shape of triangle, trapezoid, semicircle, other irregular shape, or the like. The plurality of convex portions 121 in the drawings of the present disclosure are schematically illustrated, which do not mean that the plurality of convex portion 121 only have the shape, the size, and the like as shown in the drawings.

The plurality of convex portions 121 on the outer surface of the second emissive layer 12 may be formed by methods of etching, imprinting, printing, or the like, which is not limited in the present disclosure. The plurality of convex portion 121 can effectively reflect visible light and near-infrared light from different incident angles. Especially when an incident angle of an incident light is in a range of 30° to 60°, the composite radiative cooling film can substantially reflect all of the incident lights. Due to the plurality of convex portion 121, the second emissive layer 12 can have a high emissivity and can radiate electromagnetic waves of 7 µm to 14 µm to the outside for heat dissipation. That is, the emissivity of the outer surface of the second emissive layer 12 can be close to the emissivity of the perfect blackbody.

In some embodiments, a thickness of the first emissive layer 11 can be in a range of 10 µm to 300 µm, and a thickness of the second emissive layer 12 can be in a range of 5 µm to 150 µm.

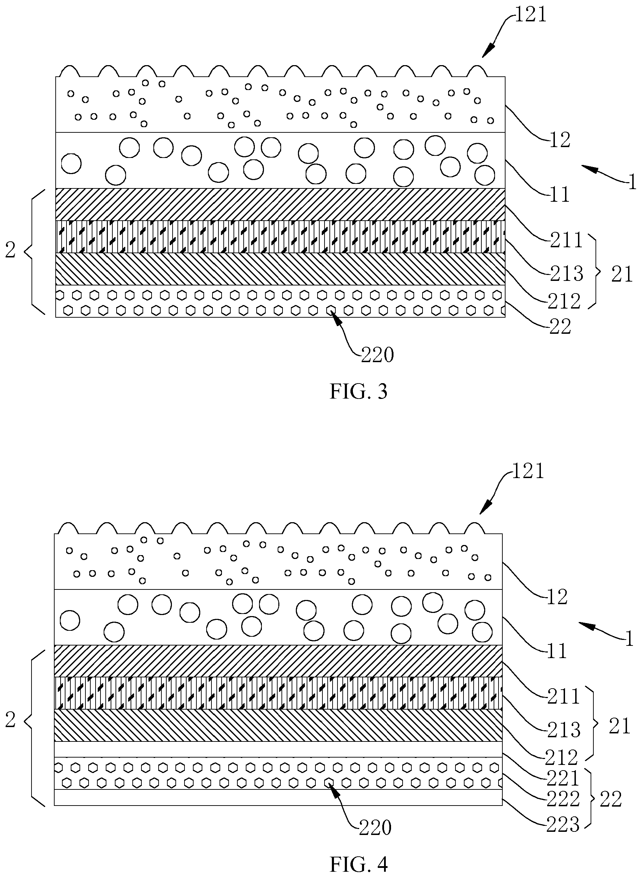

In some embodiments, referring to FIGs. 3 and 4, the reflective layer 2 can include a metal reflective layer 21. The metal reflective layer 21 may and may not be limited to a metal such as gold, silver, aluminum, copper, zinc, and so on., or a combination alloy thereof. The metal reflective layer 21 can be mainly configured for reflecting the ultraviolet light, the visible light, and the near-infrared light.

The metal reflective layer 21 may be a single layer structure or a multilayer structure. In an embodiment, the metal reflective layer 21 can include a first metal reflective layer 211 adjacent to the top layer 1 and a second metal reflective layer 212 away from the top layer 1. The first metal reflective layer 211 is mainly configured for reflecting ultraviolet, visible, and near-infrared light, and the second metal reflective layer 212 is mainly configured for enhancing the reflection of ultraviolet, visible, and near-infrared light. The first metal reflective layer 211 can be a silver reflective layer and the second metal reflective layer 212 can be an aluminum reflective layer. A thickness of the first metal reflective layer 211 can be in a range of 5 nm to 200 nm, and a thickness of the second metal reflective layer 212 can be in a range of 5 nm to 200 nm.

In some embodiments, an intermediate layer 213 can be further disposed between the first metal reflective layer 211 and the second metal reflective layer 212. The intermediate layer 213 can be configured for connecting the first metal reflective layer 211 with the second metal reflective layer 212 and avoiding electrochemical corrosion caused by directly locating one metal layer on another metal layer. A material of the intermediate layer 213 may be a polymer adhesive such as acrylate glue or polyurethane glue, or may be a ceramic material such as SiO₂, Al₂O₃, TiO₂, ZnO, Si₃N₄, Ti₃N₄, ZnS, MgF₂, or CaF₂. When the material of the intermediate layer 213 is a polymer adhesive, a thickness thereof can be in a range of 1 µm to 100 µm. When the intermediate layer 213 is a ceramic material, a thickness thereof can be in a range of 5 nm to 200 nm.

In some embodiments, the reflective layer 2 can include a resin reflective layer 22 having a plurality of third pores 220. A volume fraction of the plurality of third pores 220 in the resin reflective layer 22 can be in a range of 2% to 30%. The volume fraction of the plurality of third pores 220 in the resin reflective layer 22 can be in a range of 5% to 15%. The volume fraction of the plurality of third pores 220 in the resin reflective layer 22 can also be in a range of 8% to 10%. The plurality of third pores 220 can refract and scatter the light entering the resin reflective layer 22, thereby increasing reflectivity of the resin reflective layer 22 and improving reflectivity of the reflective layer 2. A color of the resin reflective layer 22 can be light such as white or transparent.

In some embodiments, a pore size of the plurality of third pores can be in a range of 0.2 µm to 20 µm.

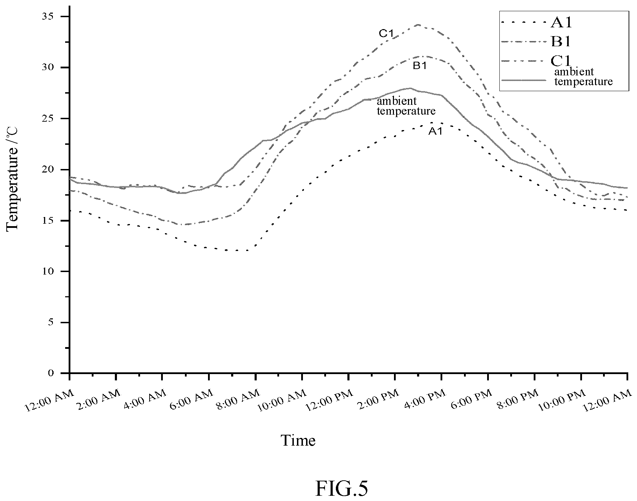

It should be noted that the shape, size and the like of the plurality of third pores 220 in FIGs. 4 and 5 are schematically illustrated, and it is not meant that the pore 220 of the present disclosure must have the shape and size shown in the figure. The distribution of the plurality of third pores 220 in the resin reflective layer 22 is also not limited to that shown in the drawing.

The resin reflective layer 22 can be poly-4-methyl-pentene (TPX), polyethylene terephthalate (PET), polybutylene terephthalate (PBT), polyethylene naphthalate (PEN), acrylonitrile-butadiene-styrene copolymer (ABS), polystyrene (PS), polypropylene (PP), or polycarbonate (PC). A thickness of the resin reflective layer 22 can be in a range of 25 µm to 300 µm. Preferably, the thickness of the resin reflective layer 22 can be in a range of 50 µm to 150 µm.

The resin reflective layer 22 may be a single layer structure or a multilayer structure. Referring to FIG. 4, the resin reflective layer 22 can preferably include a first resin reflective layer 221, a second resin reflective layer 222, and a third resin reflective layer 223 which are sequentially arranged. The plurality of third pores 220 can be formed in the second resin reflective layer 222.

In some embodiments, a thickness of the first resin reflective layer and a thickness of the third resin reflective layer can be in a range of 1 µm to 50 µm, and a thickness of the second resin reflective layer can be in a range of 20 µm to 300 µm.

In some embodiments, the volume fraction of the plurality of third pores in the second resin reflective layer 222 can be in a range of 2% to 30%.

It should be mentioned that the plurality of third pores 220 in the resin reflective layer 22 can be formed by the biaxial stretching method. If the resin reflective layer 22 is a single layer structure, it will be easy to break during the biaxial stretching. Moreover, due to the plurality of third pores, a surface of the second resin reflective layer 222 may not be flat. If the metal reflective layer is directly disposed on the second resin reflective layer 222, the flatness of the metal reflective layer may be affected, thereby the reflectivity of the metal reflective layer may be reduced. The first resin reflective layer 221 and the third resin reflective layer 223 disposed on both sides of the second resin reflective layer 222 can be acted as a support layer, which can improve the stability of the resin reflective layer 22 during preparation, reduce a possibility of film rupture, and can also be used as a substrate of the metal reflective layer to ensure the flatness of the metal reflective layer.

In some embodiments, the reflective layer 2 can include both the metal reflective layer 21 and the resin reflective layer 22. The resin reflective layer 22 can be disposed on a side of the metal reflective layer 21 away from the top layer 1. The structures of the metal reflective layer 21 and the resin reflective layer 22 are substantially the same as described above and are not described herein.

The present disclosure further provides a composite radiative cooling film assembly in another embodiment. The composite radiative cooling film assembly can be formed by the composite radiative cooling film and a substrate. The reflective layer of the composite radiative cooling film can be disposed on a surface of the substrate.

Preferably, the substrate can be selected from metal, plastic, rubber, asphalt, a waterproof material, concrete, cement, textile, woven fabric, wood, ceramic tile, glass product, an organic synthetic material, or a combination thereof.

However, it should be understood that the material of the substrate is not exhaustive, and the composite radiative cooling film assembly can be formed by the composite radiative cooling film and other materials.

The present disclosure further provides a use of the composite radiative cooling film in another embodiment. The use of the composite radiative cooling film can include disposing the composite radiative cooling film on a heat dissipating body and thermally communicating the composite radiative cooling film with the heat dissipating body.

By thermally communicating with the surface of the heat dissipating body, the heat of the heat dissipating body can be emitted through the atmospheric window in the form of infrared radiation, which can effectively reduce the temperature of the heat dissipating body without any additional energy. The composite radiative cooling film can be mainly applied on the outer surface of the heat dissipating body if needed and have wide applications, such as construction, photovoltaic modules and systems, automobiles, outdoor products, agriculture and animal husbandry, aerospace, cold chain transportation, outdoor cabinets, textile industry, outdoor communication equipment, industrial equipment (such as outdoor power distribution cabinets), utilities (e.g., street lamps and radiators, roof and walls of toilets, pavement of stadiums), cooling water systems, energy systems (e.g., air conditioning / cooling / heating systems), energy saving equipment, and equipment and facilities that require extreme cooling or heat dissipation of outdoors, etc. The composite radiative cooling film can also be used to improve the efficiency of solar cells, conventional power plants, or even water treatment.

Hereinafter, the composite radiative cooling film, the composite radiative cooling film assembly and the application thereof in the present disclosure will be further described by a plurality of embodiments.

### Test method

The samples obtained by the embodiments and comparative embodiments were tested. The reflectivity in the ultraviolet, visible, and near-infrared wavelength range from 300 nm to 2500 nm of the samples were measured. The samples were placed in a Perkin Elmer, Lambda 950 UV/Vis/NIR Spectrometer, and measured the reflectivity in the wavelength range from 300 nm to 2500 nm. The interval was 1 nm and the average value of the reflectivity of the samples in the wavelength range of 300 nm to 2500 nm was taken as a reflectivity R of the ultraviolet, visible, and near-infrared wavelength range of the samples, that was, the solar reflectivity R of the film in the wavelength range of 300 nm to 2500 nm.

Measurement of Infrared Emissivity E was as follows. An infrared emissivity E in a wavelength range of 7 µm to 14 µm was measured using a SOC-100 Hemispherical Directional Reflectometer.

Embodiment 1 (The embodiments 1-11 concerned do not form part of the claimed invention)

A composite radiative cooling film includes a second emissive layer, a first emissive layer, and a metal reflective layer from top to bottom.

A thickness of the second emissive layer is about 20 µm. The second emissive layer includes a PVDF polymer and a plurality of second pores dispersed in the PVDF polymer. An average pore size of the plurality of second pores is about 20 nm. A volume fraction of the plurality of second pores in the second emissive layer is about 3%.

A thickness of the first emissive layer is about 50 µm. The first emissive layer includes a TPX polymer and a plurality of first pores. An average pore size of the plurality of first pores is about 5 µm. A volume fraction of the plurality of first pores in the first emissive layer is about 15%.

A thickness of the metal reflective layer is about 100 nm. The metal reflective layer is a silver layer located on the first emissive layer.

After testing, the solar reflectivity R in a wavelength range of 300 nm to 2500 nm of the composite radiative cooling film was about 92.18% and the infrared emissivity E in a wavelength range of 7 µm to 14 µm of the composite radiative cooling film was about 93.38%.

### Embodiment 2

A composite radiative cooling film includes a second emissive layer, a first emissive layer, and a metal reflective layer from top to bottom.

A thickness of the second emissive layer is about 50 µm. The second emissive layer includes a PVDF polymer, a plurality of second pores dispersed in the PVDF polymer, and SiO₂ particles. An average pore size of the plurality of second pores is about 200 nm. A volume fraction of the plurality of second pores in the second emissive layer is about 20%. An average particle size of the SiO₂ particles is about 200 nm. A volume fraction of the SiO₂ particles in the second emissive layer is about 20%. The SiO₂ particles of about 10% volume fraction are embedded in the plurality of second pores.

A thickness of the first emissive layer is about 100 µm. The first emissive layer includes a PET polymer, a plurality of first pores dispersed in the PET polymer, and ceramic microbeads. An average pore size of the plurality of first pores is about 10 µm. A volume fraction of the plurality of first pores in the first emissive layer is about 20%. An average particle size of the ceramic microbeads is about 10 µm. A volume fraction of the ceramic microbeads in the first emissive layer is about 20%. The ceramic microbeads of about 8% volume fraction are embedded in the plurality of first pores.

A thickness of the metal reflective layer is about 200 nm and the metal reflective layer is an aluminum layer located on the first emissive layer.

After testing, the solar reflectivity R in a wavelength range of 300 nm to 2500 nm of the composite radiative cooling film was about 92.16% and the infrared emissivity E in a wavelength range of 7 µm to 14 µm of the composite radiative cooling film was about 94.36%.

### Embodiment 3

The composite radiative cooling film of embodiment 3 is substantially the same as that of embodiment 1, except that the outer surface of the second emissive layer has a plurality of convex portions. The plurality of convex portions is formed by roll embossing having a plurality of microstructures on the surface. A height of the plurality of convex portions is about 1 µm.

After testing, the solar reflectivity R in a wavelength range of 300 nm to 2500 nm of the composite radiative cooling film was about 92.71% and the infrared emissivity E in a wavelength range of 7 µm to 14 µm of the composite radiative cooling film was about 94.34%.

### Embodiment 4

The composite radiative cooling film of embodiment 4 is substantially the same as that of embodiment 1, except that the outer surface of the second emissive layer has a plurality of convex portions. The plurality of convex portions is formed by roll embossing having a plurality of microstructures on the surface. A height of the plurality of convex portions is about 100 nm.

After testing, the solar reflectivity R in a wavelength range of 300 nm to 2500 nm of the composite radiative cooling film was about 92.55% and the infrared emissivity E in a wavelength range of 7 µm to 14 µm of the composite radiative cooling film was about 93.62%.

### Embodiment 5

The composite radiative cooling film of embodiment 5 is substantially the same as that of embodiment 1, except that the average pore size of the plurality of second pores in the second emissive layer is about 250 nm and the average pore size of the plurality of first pores in the first emissive layer is about 20 µm.

After testing, the solar reflectivity R in a wavelength range of 300 nm to 2500 nm of the composite radiative cooling film was about 92.65% and the infrared emissivity E in a wavelength range of 7 µm to 14 µm of the composite radiative cooling film was about 92.97%.

### Embodiment 6

The composite radiative cooling film of embodiment 6 is substantially the same as that of embodiment 1, except that the average pore size of the plurality of second pores in the second emissive layer is about 1 nm and the average pore size of the plurality of first pores in the first emissive layer is about 1 µm.

After testing, the solar reflectivity R in a wavelength range of 300 nm to 2500 nm of the composite radiative cooling film was about 92.18% and the infrared emissivity E in a wavelength range of 7 µm to 14 µm of the composite radiative cooling film was about 92.47%.

### Embodiment 7

The composite radiative cooling film of Embodiment 7 is substantially the same as that of embodiment 2, except that the volume fraction of the plurality of first pores in the first emissive layer is about 2%, the ceramics microbeads of about 2% volume fraction are embedded in the plurality of first pores, the volume fraction of the SiO₂ particles in the second emissive layer is about 20%, and the SiO₂ particles of about 10% volume fraction are embedded in the plurality of second pores.

After testing, the solar reflectivity R in a wavelength range of 300 nm to 2500 nm of the composite radiative cooling film was about 92.25% and the infrared emissivity E in a wavelength range of 7 µm to 14 µm of the composite radiative cooling film was about 93.29%

### Embodiment 8

A composite radiative cooling film includes a second emissive layer, a first emissive layer, a first metal reflective layer, an intermediate layer, and a second metal reflective layer from top to bottom.

A thickness of the second emissive layer is about 150 µm. The second emissive layer includes a PVDF polymer, a plurality of second pores dispersed in the PVDF polymer, and barium sulfate particles. An average pore size of the plurality of second pores is about 80 nm. A volume fraction of the plurality of second pores in the second emissive layer is about 6%. An average particle size of the barium sulfate particles is about 80 nm. A volume fraction of barium sulfate particles in the second emissive layer is about 6%. The barium sulfate particles of about 3% volume fraction are embedded in the plurality of second pores.

A thickness of the first emissive layer is about 300 µm. The first emissive layer includes a TPX polymer, a plurality of first pores dispersed in the TPX polymer, and CaCO₃ particles. An average pore size of the plurality of first pores is about 20 µm. A volume fraction of the plurality of first pores in the first emissive layer is about 15%. An average particle size of the CaCO₃ particles is about 20 µm. A volume fraction of the CaCO₃ particles in the first emissive layer is about 15%. The CaCO₃ particles of about5% volume fraction are embedded in the plurality of first pores.

A thickness of the first metal reflective layer is about 200 nm and the first metal reflective layer is a silver layer located on the first emissive layer.

A thickness of the intermediate layer is about 200 nm and a material of the intermediate layer is alumina ceramic.

A thickness of the second metal reflective layer is about 200 nm and the second metal reflective layer is a silver layer located on the intermediate layer.

After testing, the solar reflectivity R in a wavelength range of 300 nm to 2500 nm of the composite radiative cooling film was about 95.29% and the infrared emissivity E in a wavelength range of 7 µm to 14 µm of the composite radiative cooling film was about 94.71%.

### Embodiment 9

A composite radiative cooling film includes a second emissive layer, a first emissive layer, a first metal reflective layer, an intermediate layer, a second metal reflective layer, and a resin reflective layer from top to bottom.

A thickness of the second emissive layer is about 5 µm. The second emissive layer includes a PMMA polymer, a plurality of second pores dispersed in the PMMA polymer, and SiO₂ particles. An average pore size of the plurality of second pores is about 100 nm. A volume fraction of the plurality of second pores in the second emissive layer is about 14%. An average particle size of the SiO₂ particles is about 100 nm. A volume fraction of the SiO₂ particles in the second emissive layer is about 14%. The SiO₂ particles of about 7% volume fraction are embedded in the plurality of second pores.

A thickness of the first emissive layer is about 10 µm. The first emissive layer includes a PEN polymer, a plurality of first pores dispersed in the PEN polymer, and Si₃N₄ particles. An average pore size of the plurality of first pores is about 12 µm. A volume fraction of the plurality of first pores in the first emissive layer is about 8%. An average particle size of the Si₃N₄ particles is about 1 µm. A volume fraction of the Si₃N₄ particles in the first emissive layer is about 20%. The Si₃N₄ particles of about 12% volume fraction are embedded in the plurality of first pores.

A thickness of the metal reflective layer is about 5 nm and the first metal reflective layer is a silver film located on one side of the first emissive layer.

A thickness of the intermediate layer is about 100 µm and a material of the intermediate layer is acrylate glue.

A thickness of the second metal reflective layer is about 5 nm and the second metal reflective layer is an aluminum film located on one side of the resin reflective layer.

A thickness of the resin reflective layer is about 300 µm. The resin reflective layer is a white PC layer. A plurality of third pores is substantially uniformly distributed in the resin reflective layer. An average pore size of the plurality of third pores is about 20 µm. A volume fraction of the plurality of third pores in resin reflective layer is about 30%.

After testing, the solar reflectivity R in a wavelength range of 300 nm to 2500 nm of the composite radiative cooling film was about 95.18% and the infrared emissivity E in a wavelength range of 7 µm to 14 µm of the composite radiative cooling film was about 95.36%.

### Embodiment 10

A composite radiative cooling film includes a second emissive layer, a first emissive layer, a first metal reflective layer, an intermediate layer, a second metal reflective layer, and a resin reflective layer disposed from top to bottom.

A thickness of the second emissive layer is about 30 µm. The second emissive layer includes a polyurethane polymer, a plurality of second pores dispersed in the polyurethane polymer, and SiO₂ particles. An average pore size of the plurality of second pores is about 100 nm. A volume fraction of the plurality of second pores in the second emissive layer is about 14%. An average particle size of the SiO₂ particles is about 100 nm. A volume fraction of the SiO₂ particles in the second emissive layer is about 14%. The SiO₂ particles of about 10% volume fraction are embedded in the plurality of second pores.

A thickness of the first emissive layer is about 50 µm. The first emissive layer includes a PEN polymer, a plurality of first pores dispersed in the PEN polymer, and Si₃N₄ particles. An average pore size of the plurality of first pores is about 12 µm. A volume fraction of the plurality of first pores in the first emissive layer is about 8%. An average particle size of the Si₃N₄ particles is about 12 µm. A volume fraction of the Si₃N₄ particles in the first emissive layer is about 20%. The Si₃N₄ particles of about 5% volume fraction are embedded in the plurality of first pores.

A thickness of the metal reflective layer is about 20 nm and the first metal reflective layer is a silver film located on one side of the first emissive layer.

A thickness of the intermediate layer is about 1 µm and a material of the intermediate layer is acrylate glue.

A thickness of the second metal reflective layer is about 200 nm and the second metal reflective layer is an aluminum film located on one side of the resin reflective layer.

A thickness of the resin reflective layer is about 25 µm. The resin reflective layer is a white PC layer. The resin reflective layer includes a first resin reflective layer, a second resin reflective layer, and a third resin reflective layer, which are sequentially arranged. The second resin reflective layer includes a plurality of third pores. An average pore size of the plurality of third pores is about 0.2 µm. A volume fraction of the plurality of third pores in the second resin reflective layer is about 2%. The first resin reflective layer and the third resin reflective layer substantially do not include any pore structure.

After testing, the solar reflectivity R in a wavelength range of 300 nm to 2500 nm of the composite radiative cooling film was about 94.97% and the infrared emissivity E in a wavelength range of 7 µm to 14 µm of the composite radiative cooling film was about 95.20%.

### Embodiment 11

A composite radiative cooling film of embodiment 11 is substantially the same as that of embodiment 2, except that the average pore size of the plurality of first pores in the first emissive layer is about 10 µm, the volume fraction of the plurality of first pores in the first emissive layer is about 10%, The ceramics microbeads of about 8% volume fraction are embedded in the plurality of first pores, the average pore size of the plurality of second pores in the second emissive layer is about 100 nm, the volume fraction of the plurality of second pores in the second emissive layer is about 8%, and the SiO₂ particles of about 3% volume fraction are embedded in the plurality of second pores.

After testing, the solar reflectivity R in a wavelength range of 300 nm to 2500 nm of the composite radiative cooling film was about 92.72% and the infrared emissivity E in a wavelength range of 7 µm to 14 µm of the composite radiative cooling film was about 94.68%.

### Comparative embodiment 1

A composite radiative cooling film includes an emissive layer and a metal reflective layer from top to bottom.

A thickness of the emissive layer is about 50 µm. The emissive layer includes a PET polymer and SiO₂ particles. An average particle size of the SiO₂ particles is about 200 nm. A volume fraction of the additive (SiO₂ particles) in the emissive layer is about 20%.

A thickness of the metal reflective layer is about 200 nm and the metal reflective layer is an aluminum layer located on the emissive layer.

After testing, the solar reflectivity R in a wavelength range of 300 nm to 2500 nm of the composite radiative cooling film was about 91.93% and the infrared emissivity E in a wavelength range of 7 µm to 14 µm of the composite radiative cooling film was about 83.85%.

### Comparative embodiment 2

A composite radiative cooling film includes an emissive layer and a metal reflective layer from top to bottom.

A thickness of the emissive layer is about 150 µm. The emissive layer includes TPX polymer and SiO₂ particles. An average particle size of the SiO₂ particles is about 20 µm, and a volume fraction of the additive (SiO₂ particles) in the emissive layer is about 15%.

A thickness of the metal reflective layer is about 250 nm and the metal reflective layer is a silver layer located on the emissive layer.

After testing, the solar reflectivity R in a wavelength range of 300 nm to 2500 nm of the composite radiative cooling film was about 92.39% and the infrared emissivity E in a wavelength range of 7 µm to 14 µm of the composite radiative cooling film was about 83.66%.

### Comparative embodiment 3

A composite radiative cooling film includes an emissive layer and a metal reflective layer from top to bottom.

A thickness of the emissive layer is about 50 µm. The emissive layer includes a PET polymer, CaCO₃ particles and SiO₂ particles. The CaCO₃ particles and the SiO₂ particles are substantially uniformly dispersed in the PET polymer. An average particle size of the CaCO₃ particles is about 500 nm. An average particle size of the SiO₂ particles is about 50 µm. A volume fraction of CaCO₃ particles in the emissive layer is about 8%. And a volume fraction of SiO₂ particles in the emissive layer is about 12%.

A thickness of the metal reflective layer is about 250 nm and the metal reflective layer is a silver layer located on the emissive layer.

After testing, the solar reflectivity R in a wavelength range of 300 nm to 2500 nm of the composite radiative cooling film was about 93.07% and the infrared emissivity E in a wavelength range of 7 µm to 14 µm of the composite radiative cooling film was about 84.72%.

### Comparative embodiment 4

A composite radiative cooling film includes a second emissive layer, a first emissive layer, and a metal reflective layer from top to bottom.

A thickness of the second emissive layer is about 20 µm and the second emissive layer includes a PVDF polymer.

A thickness of the first emissive layer is about 5 µm. The first emissive layer includes a TPX polymer and a plurality of first pores. An average pore size of the plurality of first pores is about 5 µm. A volume fraction of the plurality of first pores in the first emissive layer is about 15%.

A thickness of the metal reflective layer is about 200 nm and the metal reflective layer is a silver layer located on the first emissive layer.

After testing, the solar reflectivity R in a wavelength range of 300 nm to 2500 nm of the composite radiative cooling film was about 92.78% and the infrared emissivity E in a wavelength range of 7 µm to 14 µm of the composite radiative cooling film was about 91.37%.

### Comparative embodiment 5

A composite radiative cooling film includes a second emissive layer, a first emissive layer, and a metal reflective layer from top to bottom.

A thickness of the second emissive layer is about 20 µm. The second emissive layer includes a FEP polymer and a plurality of second pores dispersed in the FEP polymer. An average pore size of the plurality of second pores is about 20 nm. A volume fraction of the plurality of second pores in the second emissive layer is about 3%.

A thickness of the first emissive layer is about 5 µm and the first emissive layer includes a TPX polymer.

A thickness of the metal reflective layer is about 250 nm and the metal reflective layer is a silver layer located on the first emissive layer.

After testing, the solar reflectivity R in a wavelength range of 300 nm to 2500 nm of the composite radiative cooling film was about 92.81%and the infrared emissivity E in a wavelength range of 7 µm to 14 µm of the composite radiative cooling film was about 90.12%.

### Comparative embodiment 6

A composite radiative cooling film include a second emissive layer, a first emissive layer, and a metal reflective layer from top to bottom.

A thickness of the second emissive layer is about 20 µm and the second emissive layer includes a PMMA polymer.

A thickness of the first emissive layer is about 5 µm and the first emissive layer includes a TPX polymer.

A thickness of the metal reflective layer is about 250 nm and the metal reflective layer is a silver layer located on the first emissive layer.

After testing, the solar reflectivity R in a wavelength range of 300 nm to 2500 nm of the composite radiative cooling film was about 92.72% and the infrared emissivity E in a wavelength range of 7 µm to 14 µm of the composite radiative cooling film was about 90.03%.

### Comparative embodiment 7

A composite radiative cooling film includes an emissive layer and a metal reflective layer from top to bottom.

A thickness of the emissive layer is about 10 µm. The emissive layer includes a PET polymer and a plurality of first pores and a plurality of second pores. The plurality of first pores and the plurality of second pores are dispersed in the PET polymer. An average pore size of the plurality of first pores is about 5 µm. A volume fraction of the plurality of first pores in the PET polymer is about 15%. An average pore size of the plurality of second pores is about 20 nm. A volume fraction of the plurality of second pores is about 3%.

A thickness of the metal reflective layer is about 250 nm and the metal reflective layer is a silver layer located on the first emissive layer.

After testing, the solar reflectivity R in a wavelength range of 300 nm to 2500 nm of the composite radiative cooling film was about 92.82% and the infrared emissivity E in a wavelength range of 7 µm to 14 µm of the composite radiative cooling film was about 90.13%.

### Comparative embodiment 8

A composite radiative cooling film includes a second emissive layer, a first emissive layer, and a metal reflective layer from top to bottom.

A thickness of the second emissive layer is about 20 µm. The second emissive layer includes a PVDF polymer and a plurality of second pores dispersed in the PVDF polymer. An average pore size of the plurality of second pores is about 5 µm. A volume fraction of the plurality of second pores in the emissive layer is about 15%.

A thickness of the first emissive layer is about 5 µm. The first emissive layer includes a TPX polymer and a plurality of first pores. An average pore size of the plurality of first pores is about 20 nm. A volume fraction of the plurality of first pores in the first emissive layer is about 3%.

A thickness of the metal reflective layer is about 250 nm and the metal reflective layer is a silver layer disposed on the first emissive layer.

After testing, the solar reflectivity R in a wavelength range of 300 nm to 2500 nm of the composite radiative cooling film was about 92.78% and the infrared emissivity E in a wavelength range of 7 µm to 14 µm of the composite radiative cooling film was about 87.12%.

### Comparative embodiment 9

A composite radiative cooling film includes a second emissive layer, a first emissive layer, and a metal reflective layer from top to bottom.

A thickness of the second emissive layer is about 20 µm. The second emissive layer includes a PMMA polymer and a plurality of second pores dispersed in the PMMA polymer. An average pore size of the plurality of second pores is about 20 nm. A volume fraction of the plurality of second pores in the second emissive layer is about 30%.

A thickness of the first emissive layer is 5 µm. The first emissive layer includes a TPX polymer and a plurality of first pores. An average pore size of the plurality of first pores is about 5 µm. A volume fraction of the plurality of first pores in the first emissive layer is about 30%.

A thickness of the metal reflective layer is about 250 nm and the metal reflective layer is a silver layer located on the first emissive layer.

After testing, the solar reflectivity R in a wavelength range of 300 nm to 2500 nm of the composite radiative cooling film was about 92.69% and the infrared emissivity E in a wavelength range of 7 µm to 14 µm of the composite radiative cooling film was about 89.13%.

In order to explain the radiative cooling effect of the emissive layer containing polymers with different functional groups, PVDF and PMMA will be described as below.

In appearance, PMMA is transparent and PVDF is translucent. PMMA includes functional groups of C-H, C=O and C-O, and PVDF includes functional groups of C-H and C-F, which have bending vibrations in the finger-print region (i.e. the atmospheric window). The solar absorptivity and infrared emissivity of a PVDF film with a thickness of 100 µm, a PMMA film with a thickness of 100 µm, and a PVDF-PMMA blend film with a thickness of 100 µm were measured.

An average solar absorptivity of the PVDF film with the thickness of 100 µm was only about 3.0%. An average solar absorptivity of the PMMA film with the thickness of 100 µm was about 5.0%. A solar absorptivity of the PVDF-PMMA blend film with the thickness of 100 µm was as high as 10.0%. Since the PVDF-PMMA blend film with the thickness of 100 µm absorbed solar radiation too much, the effect of radiative cooling below ambient temperature in the daytime is worse.

In the atmospheric window (7 µm to 14 µm), an average emissivity of the PVDF film with the thickness of 100 µm was 93%, and an average emissivity of the PMMA film with the thickness of 100 µm was lower, that is 91%. The emissivity of the PMMA film with the thickness of 100 µm and the PVDF film with the thickness of 100 µm under various zenith angles were also tested. The experiment showed that an emissivity of the PMMA film with the thickness of 100 µm was significantly lower than that of the PVDF film with the thickness of 100 µm. A difference between the emissivity of the PMMA film and that of the PVDF film was about 5%. For a radiative cooling application, a lower solar absorptivity and a higher infrared emissivity in the atmospheric window (7 µm to 14 µm) are important for achieving radiative cooling below ambient temperature during the daytime. The PVDF film with the same thickness has a better solar radiative cooling effect than the PMMA film and the PVDF-PMMA blend film because of its lower solar absorptivity and higher selective emissivity.

Lower solar absorptivity requires less thickness of a film, but higher infrared emission requires a large thickness of the film. Polymer films with the large thickness such as PVDF and PMMA can be possibly ideal infrared emitters/absorbers, while they have a significantly high solar absorptivity. Therefore, there will be an optimum thickness or thickness range for better radiative cooling effect in the daytime. Depending on the type of polymer, there is the optimum thickness or thickness range for better radiative cooling effect in the daytime, and the thickness of the film is preferably in a range of 20 µm to 300 µm, and more preferably, 50 µm to 150 µm. In the present disclosure, the inorganic fillers such as glass beads, ceramic beads, silicon oxide particles, silicon carbide particles, silicon nitride particles, barium sulfate particles, calcium carbonate particles, and the like can be added to the polymers with functional groups and have a high emissivity in the atmosphere window (in a wavelength range of 7 µm to 14 µm). Organic fillers such as PET, PBT, PC, PVC, PMMA, PVDF, PTFE, FEP, PDMS, etc. can be added to the polymers with functional groups and also have a high emissivity in the atmosphere window (in a wavelength range of 7 µm to 14 µm). When an organic filler having the same material as the polymer is added to the polymer, the prepared film may be a uniform film or a film containing the organic filler particles. For example, when a PVDF organic filler is added to the PVDF polymer, the prepared film may be a uniform PVDF film or a film containing PVDF particles.

A PVDF film with a silver reflective layer on the back side and a PMMA film with a silver reflective layer on the back side are respectively applied to water tanks to illustrate radiative cooling effect of the polymer with different functional groups.

### Embodiment 12

A water tank made of plastic material has an inner length, a width and a height of 800 mm, 800 mm, and 80 mm, respectively. A composite radiative cooling film is disposed on an upper surface of the water tank and includes a first emissive layer and a metal reflective layer from top to bottom.

A thickness of the first emissive layer is about 100 µm. The first emissive layer includes a first polymer of PVDF, a plurality of first pores dispersed in the first polymer, and a first additive of PVDF. That is, the first emissive layer is a uniform PVDF film with plurality of first pores. An average pore size of the plurality of first pores is about 10 µm. A volume fraction of the plurality of first pores in the first emissive layer is about 10%. A size of the first additive is about 10 µm. And a volume fraction of the first additive in the first emissive layer is about 10%.

A thickness of the metal reflective layer is about 150 nm and the metal reflective layer is a silver layer located on the first emissive layer.

The water tank in this embodiment is denoted by H, and one temperature measuring point H1 is provided at the center of the water inside the water tank H.

After testing, the solar reflectivity R in a wavelength range of 300 nm to 2500 nm of the composite radiative cooling film was about 92.88% and the infrared emissivity E in a wavelength range of 7 µm to 14 µm of the composite radiative cooling film was about 93.29%.

### Comparative embodiment 10

A water tank of the same material and size as the water tank H is provided. A composite radiative cooling film is disposed on an upper surface of the water tank. The composite radiative cooling film of the comparative embodiment 10 is substantially the same as the composite radiative cooling film of embodiment 12, except that both the first polymer and the first additive of the first emissive layer are PMMA. That is, the first emissive layer is a uniform PMMA film with a plurality of first pores. The water tank with the composite radiative cooling film is denoted as I, and one temperature measuring point I1 is provided at the center of the water inside the water tank I.

After testing, the solar reflectivity R in a wavelength range of 300 nm to 2500 nm of the composite radiative cooling film was about 92.76% and the infrared emissivity E in a wavelength range of 7 µm to 14 µm of the composite radiative cooling film was about 92.26%.

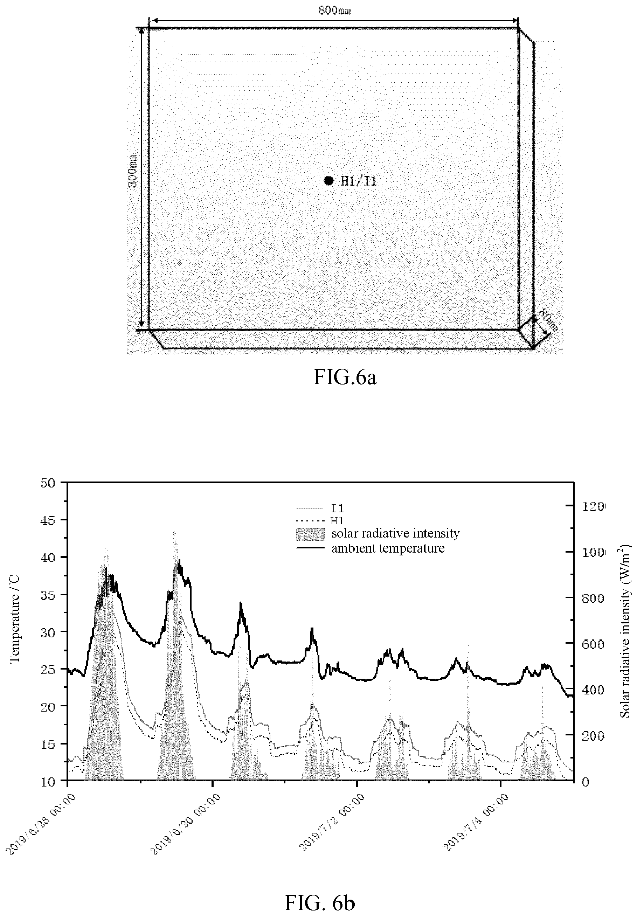

FIG. 6a shows a schematic view of temperature measuring points H1 and I1 at the center of the water in the water tanks H and I. From June 28 to July 4, 2019, on the lawn of No. 88 Dongfeng Road, Fenghua District, Ningbo City, changes of the internal temperature measuring points H1 and I1 and a change of the ambient temperature were tested within 7 days. In the period, there were different weather conditions, such as sunny, cloudy and rainy. The angle of inclination of the water tanks when installed relative to the horizontal plane was 15 degrees. This installation angle could appropriately reduce the solar irradiance on the plate. The test results were shown in FIG. 6b.

Referring to FIG. 6b, the temperature of the temperature measuring point H1 in the water tank H was lower than the ambient temperature and the difference between the two was 13.5 degrees centigrade. The temperature of the temperature measuring point I1 in the water tank I was lower than the ambient temperature and the difference between the two was 12.4 degrees centigrade. The temperatures of the temperature measuring point H1 in the daytime and at night were lower than those of the temperature measuring point J1. The difference was mainly due to the low solar absorptivity of the PVDF film during the daytime; at night, the PVDF film could reach a lower temperature because it had a higher emissivity in the atmospheric window and a higher selectivity than PMMA film. Interestingly, on the evening of July 4, at an ambient temperature of 21.6 degrees centigrade, the PVDF film could make the water cool down to 9.6 degrees centigrade, indicating that the water could be cooled at night and maintained at a cooling state in the daytime, and the use of highly selective emissive materials might be a promising approach to effectively meet cooling requirements of practical applications. Although PVDF and PMMA films have the same thickness, the PVDF film can have better properties of solar reflection, infrared emission, and radiative cooling below the ambient temperature during the daytime, indicating that polymers with C-F functional group may be more suitable for radiative cooling during the daytime. Although both of the PVDF and PMMA films have a thickness of 100 µm, the PVDF film has a lower solar absorptivity, a higher emissivity in the atmospheric window, and a higher selectivity. Therefore, its cooling performance in the daytime and at night may be superior to the PMMA film. If used in large-scale cooling systems, this nuance of the cooling performance of polymers may lead to significant economic difference over the long term.

The embodiments 1-11 concerned do not form part of the claimed invention, the composite radiative cooling films of the embodiment 8 and the comparative embodiment 3 were respectively disposed on outer surfaces of model spaces having a spatial length, a width, and a height of 4m, 3m, 2.5m, respectively, which were denoted as model A and model B. Another model space denoted as model C was provided and its outer surface was not treated. Temperature measuring points denoted as temperature measuring points A1, B1, and C1 were respectively set in the middle of the model A, the model B, and the model C. The temperature in the model space was tested during one day, and the test results were shown in FIG.5.

**Table 2 Solar reflectivity and infrared emissivity performance of embodiments and comparative embodiments**

| Sample | Solar reflectivity R in a wavelength range of 300 nm - 2500 nm | Infrared emissivity E in a wavelength range of 7 µm -14 µm |
|---|---|---|
| Embodiment 1 | 92.18% | 93.38% |
| Embodiment 2 | 92.16% | 94.36% |
| Embodiment 3 | 92.71% | 94.34% |
| Embodiment 4 | 92.55% | 93.62% |
| Embodiment 5 | 92.65% | 92.97% |
| Embodiment 6 | 92.18% | 92.47% |
| Embodiment 7 | 92.25% | 93.29% |
| Embodiment 8 | 95.29% | 94.71% |
| Embodiment 9 | 95.18% | 95.36% |
| embodiment 10 | 94.97% | 95.20% |
| Embodiment 11 | 92.72% | 94.68% |
| Embodiment 12 | 92.88% | 93.29% |
| Comparative embodiment 1 | 91.93% | 83.85% |
| Comparative embodiment 2 | 92.39% | 83.66% |
| Comparative embodiment 3 | 93.07% | 84.72% |
| Comparative embodiment 4 | 92.78% | 91.37% |
| Comparative embodiment 5 | 92.81% | 90.12% |
| Comparative embodiment 6 | 92.72% | 90.03% |
| Comparative embodiment 7 | 92.82% | 90.13% |
| Comparative embodiment 8 | 92.78% | 87.12% |
| Comparative embodiment 9 | 92.69% | 89.13% |
| Comparative embodiment 10 | 92.76% | 92.26% |

## Claims

1. A composite radiative cooling film, comprising a top layer (1) and a reflective layer (2) disposed below the top layer (1), a material of the top layer (1) comprises at least one polymer, the at least one polymer has an emissivity that is greater than or equal to 80% in a wavelength range of 7 µm to 14 µm, measured as disclosed in the description;
the top layer (1) comprises a first emissive layer (11) adjacent to the reflective layer (2) and a second emissive layer (12) away from the reflective layer (2), a material of the first emissive layer (11) comprises a first polymer, the first emissive layer (11) further comprises a plurality of first pores, the plurality of first pores are distributed in the first emissive layer (11), a material of the second emissive layer (12) comprises a second polymer, the second emissive layer (12) further comprises a plurality of second pores, the plurality of second pores are distributed in the second emissive layer (12), a pore size of the plurality of first pores is in a range of 1 µm to 20 µm, and a pore size of the plurality of second pores is in a range of 1 nm to 200 nm;
the first emissive layer (11) further comprises a first additive embedded in at least part of the plurality of first pores;
the second emissive layer (12) further comprises a second additive embedded in at least part of the plurality of second pores;
the first additive and the second additive respectively comprise an organic filler comprising a polymer containing a C-O functional group, a polymer containing a C-Cl functional group, a polymer containing a C-F functional group, a polymer containing a C-N functional group, a polymer containing a C-Si functional group, a polymer containing a Si-O functional group, or a combination thereof.

2. The composite radiative cooling film of claim 1, wherein a volume fraction of the plurality of first pores in the first emissive layer (11) is in a range of 1% to 20%, and a volume fraction of the plurality of second pores in the second emissive layer (12) is in a range of 1% to 20%.

3. The composite radiative cooling film of claim 1, wherein a particle size of the first additive is in a range of 1 µm to 20 µm; and/or
a particle size of the second additive is in a range of 1 nm to 200 nm.

4. The composite radiative cooling film of claim 1, wherein a volume fraction of the first additive in the first emissive layer (11) is in a range of 0 to 20%, and a volume fraction of the second additive in the second emissive layer (12) is in a range of 0 to 20%;
the first additive and the second additive respectively further comprise an inorganic filler comprising glass beads, ceramic beads, silicon oxide particles, silicon carbide particles, silicon nitride particles, barium sulfate particles, calcium carbonate particles, or a combination thereof.

5. The composite radiative cooling film of claim 1, wherein the organic filler comprises polyethylene terephthalate, polybutylene terephthalate, polyethylene naphthalate, polycarbonate, polyvinyl chloride, polymethyl methacrylate, polyvinylidene fluoride, teflon, fluorinated ethylene propylene, polydimethylsiloxane, polyurethane, or a combination thereof.

6. The composite radiative cooling film of claim 1, wherein the first polymer comprises poly-4-methyl-pentene, poly-4-methyl-1-pentene, polyethylene, polypropylene, polystyrene, or a combination thereof, and the second polymer comprises acrylic resin, polyurethane resin, fluorine resin, or a combination thereof.

7. The composite radiative cooling film of claim 1, wherein the first polymer comprises a polymer containing a C-O functional group, a polymer containing a C-Cl functional group, a polymer containing a C-F functional group, a polymer containing a C-N functional group, a polymer containing a C-Si functional group, a polymer containing a Si-O functional group, or a combination thereof.

8. The composite radiative cooling film of claim 7, wherein the first polymer comprises polyethylene terephthalate, polybutylene terephthalate, polyethylene naphthalate, polycarbonate, polyvinyl chloride, polymethyl methacrylate, polyvinylidene fluoride, teflon, fluorinated ethylene propylene, polydimethylsiloxane, polyurethane, or a combination thereof.

9. The composite radiative cooling film of claim 1, wherein a plurality of convex portions (121) is distributed on a side surface of the second emissive layer (12) away from the first emissive layer (11);
a height of the plurality of convex portions (121) is in a range of 1 µm to 100 µm;
a thickness of the first emissive layer (11) is in a range of 10 µm to 300 µm, and a thickness of the second emissive layer (12) is in a range of 5 µm to 150 µm.

10. The composite radiative cooling film of claim 1, wherein the reflective layer (2) comprises a metal reflective layer (21), and a material of the metal reflective layer (21) comprises gold, silver, aluminum, copper, zinc, or a combination thereof.

11. The composite radiative cooling film of claim 10, wherein the metal reflective layer (21) comprises a first metal reflective layer (211) adjacent to the top layer (1) and a second metal reflective layer (212) away from the top layer (1), a material of the first metal reflective layer (211) is the same as or different from that of the second metal reflective layer (212), a thickness of the first metal reflective layer (211) is in a range of 5 nm to 200 nm, and a thickness of the second metal reflective layer (212) is in range of 5 nm to 200 nm;
the metal reflective layer (21) further comprises an intermediate layer (213) disposed between the first metal reflective layer (211) and the second metal reflective layer (212).

12. The composite radiative cooling film of claim 1, wherein
the reflective layer (2) comprises a resin reflective layer (22) and the resin reflective layer (22) comprises a plurality of third pores (220);
a pore size of the plurality of third pores (220) is in a range of 0.2 µm to 20 µm;
a thickness of the resin reflective layer (22) is in a range of 25 µm to 300 µm;
a material of the resin reflective layer (22) comprises poly-4-methyl-pentene, polyethylene terephthalate, polybutylene terephthalate, polyethylene naphthalate, acrylonitrile butadiene styrene copolymer, polystyrene, polypropylene, polycarbonate, or combination thereof.

13. The composite radiative cooling film of claim 12, wherein the resin reflective layer (22) comprises a first resin reflective layer (221), a second resin reflective layer (222), and a third resin reflective layer (223) which are sequentially arranged, and the plurality of third pores (220) are distributed in the second resin reflective layer (222);
a volume fraction of the plurality of third pores (220) in the second resin reflective layer (222) is in a range of 2% to 30%.

14. The composite radiative cooling film of claim 1, wherein the reflective layer (2) comprises a metal reflective layer (21) adjacent to the top layer (1) and a resin reflective layer (22) away from the top layer (1).

15. A composite radiative cooling film assembly formed by the composite radiative cooling film of any one of claims 1-14 and a substrate, the reflective layer (2) of the composite radiative cooling film is disposed on a surface of the substrate;
the substrate comprises metal, plastic, rubber, asphalt, a waterproof material, concrete, cement, textile, woven fabric, wood, ceramic tile, glass product, an organic synthetic material, or a combination thereof.

16. An use of the composite radiative cooling film of any one of claims 1-14, comprising:
disposing the composite radiative cooling film on a heat dissipating body; and
thermally communicating the composite radiative cooling film with the heat dissipating body.

## Patentansprüche

1. Kühlende Verbundstrahlungsfolie, umfassend eine obere Schicht (1) und eine reflektierende Schicht (2), die unter der oberen Schicht (1) angeordnet ist, wobei ein Material der oberen Schicht (1) wenigstens ein Polymer umfasst, wobei das wenigstens eine Polymer eine Emissivität von größer als oder gleich 80 % in einem Wellenlängenbereich von 7 µm bis 14 µm aufweist, gemessen wie in der Beschreibung offenbart;
wobei die obere Schicht (1) eine erste Emitterschicht (11) benachbart zu der reflektierenden Schicht (2) und eine zweite Emitterschicht (12) entfernt von der reflektierenden Schicht (2) umfasst, wobei ein Material der ersten Emitterschicht (11) ein erstes Polymer umfasst, wobei die erste Emitterschicht (11) ferner eine Vielzahl von erste Poren umfasst, wobei die Vielzahl von ersten Poren in der ersten Emitterschicht (11) verteilt ist, wobei ein Material der zweiten Emitterschicht (12) ein zweites Polymer umfasst, wobei die zweite Emitterschicht (12) ferner eine Vielzahl von zweite Poren umfasst, wobei die Vielzahl von zweite Poren in der zweiten Emitterschicht (12) verteilt ist, wobei eine Porengröße der Vielzahl von ersten Poren in einem Bereich von 1 µm bis 20 µm liegt und eine Porengröße der Vielzahl von zweiten Poren in einem Bereich von 1 nm bis 200 nm liegt;
wobei die erste Emitterschicht (11) ferner einen ersten Zusatzstoff umfasst, der in wenigstens einem Teil der Vielzahl von ersten Poren eingebettet ist;
wobei die zweite Emitterschicht (12) ferner einen zweiten Zusatzstoff umfasst, der in wenigstens einem Teil der Vielzahl von zweiten Poren eingebettet ist;
wobei der erste Zusatzstoff und der zweite Zusatzstoff jeweils einen organischen Füllstoff umfassen, umfassend ein Polymer, das eine funktionelle C-O-Gruppe enthält, ein Polymer, das eine funktionelle C-Cl-Gruppe enthält, ein Polymer, das eine funktionelle C-F-Gruppe enthält, ein Polymer, das eine funktionelle C-N-Gruppe enthält, ein Polymer, das eine funktionelle C-Si-Gruppe enthält, ein Polymer, das eine funktionelle Si-O-Gruppe enthält, oder eine Kombination davon.

2. Kühlende Verbundstrahlungsfolie nach Anspruch 1, wobei ein Volumenanteil der Vielzahl von ersten Poren in der ersten Emitterschicht (11) in einem Bereich von l % bis 20 % liegt und ein Volumenanteil der Vielzahl von zweiten Poren in der zweiten Emitterschicht (12) in einem Bereich von 1 % bis 20 % liegt.

3. Kühlende Verbundstrahlungsfolie nach Anspruch 1, wobei eine Teilchengröße des ersten Zusatzstoffs in einem Bereich von 1 µm bis 20 µm liegt; und/oder
eine Teilchengröße des zweiten Zusatzstoffs in einem Bereich von 1 nm bis 200 nm liegt.

4. Kühlende Verbundstrahlungsfolie nach Anspruch 1, wobei ein Volumenanteil des ersten Zusatzstoffs in der ersten Emitterschicht (11) in einem Bereich von 0 bis 20 % liegt und ein Volumenanteil des zweiten Zusatzstoffs in the zweiten Emitterschicht (12) in einem Bereich von 0 bis 20 % liegt;
wobei der erste Zusatzstoff und der zweite Zusatzstoff jeweils ferner einen anorganischen Füllstoff umfassen, umfassend Glasperlen, Keramikperlen, Siliziumoxidteilchen, Siliziumkarbidteilchen, Siliziumnitridteilchen, Bariumsulfatteilche, Kalziumcarbonatteilchen oder eine Kombination davon.

5. Kühlende Verbundstrahlungsfolie nach Anspruch 1, wobei der organischen Füllstoff Polyethylenterephthalat, Polybutylenterephthalat, Polyethylennaphthalat, Polycarbonat, Polyvinylchlorid, Polymethylmethacrylat, Polyvinylidenfluorid, Teflon, fluoriertes Ethylenpropylen, Polydimethylsiloxan, Polyurethan oder eine Kombination davon umfasst.

6. Kühlende Verbundstrahlungsfolie nach Anspruch 1, wobei das erste Polymer Poly-4-methylpenten, Poly-4-methyl-1-penten, Polyethylen, Polypropylen, Polystyrol oder eine Kombination davon umfasst und das zweite Polymer Acrylharz, Polyurethanharz, Fluorharz oder eine Kombination davon umfasst.

7. Kühlende Verbundstrahlungsfolie nach Anspruch 1, wobei das erste Polymer ein Polymer, das eine funktionelle C-O-Gruppe enthält, ein Polymer, das eine funktionelle C-Cl-Gruppe enthält, ein Polymer, das eine funktionelle C-F-Gruppe enthält, ein Polymer, das eine funktionelle C-N-Gruppe enthält, ein Polymer, das eine funktionelle C-Si-Gruppe enthält, ein Polymer, das eine funktionelle Si-O-Gruppe enthält, oder eine Kombination davon umfasst.

8. Kühlende Verbundstrahlungsfolie nach Anspruch 7, wobei das erste Polymer Polyethylenterephthalat, Polybutylenterephthalat, Polyethylennaphthalat, Polycarbonat, Polyvinylchlorid, Polymethylmethacrylat, Polyvinylidenfluorid, Teflon, fluoriertes Ethylenpropylen, Polydimethylsiloxan, Polyurethan oder eine Kombination davon umfasst.

9. Kühlende Verbundstrahlungsfolie nach Anspruch 1, wobei eine Vielzahl von konvexen Abschnitten (121) an einer Seitenfläche der zweiten Emitterschicht (12) verteilt ist, die von der ersten Emitterschicht (11) entfernt ist;
eine Höhe der Vielzahl von konvexen Abschnitten (121) in einem Bereich von 1 µm bis 100 µm liegt;
eine Dicke der ersten Emitterschicht (11) in einem Bereich von 10 µm bis 300 µm liegt und eine Dicke der zweiten Emitterschicht (12) in einem Bereich von 5 µm bis 150 µm liegt.

10. Kühlende Verbundstrahlungsfolie nach Anspruch 1, wobei die reflektierende Schicht (2) eine reflektierende Metallschicht (21) umfasst und ein Material der reflektierenden Metallschicht (21) Gold, Silber, Aluminium, Kupfer, Zink oder eine Kombination davon umfasst.

11. Kühlende Verbundstrahlungsfolie nach Anspruch 10, wobei die reflektierende Metallschicht (21) eine erste reflektierende Metallschicht (211) benachbart zu der oberen Schicht (1) und eine zweite reflektierende Metallschicht (212) entfernt von der oberen Schicht (1) umfasst, ein Material der ersten reflektierenden Metallschicht (211) gleich oder verschieden von der zweiten reflektierenden Metallschicht (212) ist, eine Dicke der ersten reflektierenden Metallschicht (211) in einem Bereich von 5 nm bis 200 nm liegt und eine Dicke der zweiten reflektierenden Metallschicht (212) in einem Bereich von 5 nm bis 200 nm liegt;
wobei die reflektierende Metallschicht (21) ferner eine Zwischenschicht (213) umfasst, die zwischen der ersten reflektierenden Metallschicht (211) und der zweiten reflektierenden Metallschicht (212) angeordnet ist.

12. Kühlende Verbundstrahlungsfolie nach Anspruch 1, wobei
die reflektierende Schicht (2) eine reflektierende Harzschicht (22) umfasst und die reflektierende Harzschicht (22) eine Vielzahl von dritten Poren (220) umfasst;
wobei eine Porengröße der Vielzahl von dritten Poren (220) in einem Bereich von 0,2 µm bis 20 µm liegt;
eine Dicke der reflektierenden Harzschicht (22) in einem Bereich von 25 µm bis 300 µm liegt;
wobei ein Material der reflektierenden Harzschicht (22) Poly-4-methylpenten, Polyethylenterephthalat, Polybutylenterephthalat, Polyethylennaphthalat, Acrylnitril-Butadien-Styrol-Copolymer, Polystyrol, Polypropylen, Polycarbonat oder eine Kombination davon umfasst.

13. Kühlende Verbundstrahlungsfolie nach Anspruch 12, wobei die reflektierende Harzschicht (22) eine erste reflektierende Harzschicht (221), eine zweite reflektierende Harzschicht (222), und eine dritte reflektierende Harzschicht (223) umfasst, die nacheinander angeordnet sind, und die Vielzahl von dritten Poren (220) in der zweiten reflektierenden Harzschicht (222) verteilt ist;
wobei ein Volumenanteil der Vielzahl von dritten Poren (220) in der zweiten reflektierenden Harzschicht (222) in einem Bereich von 2 % bis 30 % liegt.

14. Kühlende Verbundstrahlungsfolie nach Anspruch 1, wobei die reflektierende Schicht (2) eine reflektierende Metallschicht (21) benachbart zu der oberen Schicht (1) und eine reflektierende Harzschicht (22) entfernt von der oberen Schicht (1) umfasst.

15. Kühlende Verbundstrahlungsfolienbaugruppe, die durch die kühlende Verbundstrahlungsfolie nach einem der Ansprüche 1-14 und einen Träger gebildet ist, wobei die reflektierende Schicht (2) der kühlenden Verbundstrahlungsfolie auf einer Oberfläche des Trägers angeordnet ist;
wobei der Träger Metall, Kunststoff, Gummi, Asphalt, ein wasserfestes Material, Beton, Zement, eine Textilie, ein Gewebe, Holz, eine Keramikkachel, ein Glasprodukt, ein organisches synthetisches Material oder eine Kombination davon umfasst.

16. Verwendung der kühlenden Verbundstrahlungsfolie nach einem der Ansprüche 1-14, umfassend:
Anordnen der kühlenden Verbundstrahlungsfolie an einem Wärmeableitungskörper; und
thermisches Verbinden der kühlenden Verbundstrahlungsfolie mit dem Wärmeableitungskörper.

## Revendications

1. Un film de refroidissement radiatif composite, comprenant une couche supérieure (1) et une couche réfléchissante (2) disposée en dessous de la couche supérieure (1), le matériau de la couche supérieure (1) comprend au moins un polymère, le au moins un polymère est doté d'une émissivité supérieure ou égale à 80% dans une longueur d'onde de 7 µm à 14 µm, mesurée telle que révélé dans la description ;
la couche supérieure (1) comprend une première couche émissive (11) adjacente à la couche réfléchissante (2) et une deuxième couche émissive (12) distale de la couche réfléchissante (2), le matériau de la première couche émissive (11) comprend un premier polymère, la première couche émissive (11) comprend en outre une pluralité de premiers pores, la pluralité de premiers pores est distribuée dans la première couche émissive (11), le matériau de la deuxième couche émissive (12) comprend un deuxième polymère, la deuxième couche émissive (12) comprend en outre une pluralité de deuxième pores, la pluralité de deuxième pores est distribuée dans la deuxième couche émissive (12), la taille de pore de la pluralité de premiers pores est dans une plage de 1 µm à 20 µm, et la taille de pore de la pluralité de deuxièmes pores est dans une plage de 1 nm à 200 nm ;
la première couche émissive (11) comprend en outre un premier additif intégré dans au moins une partie de la pluralité de premiers pores ;
la deuxième couche émissive (12) comprend en outre un deuxième additif intégré dans au moins une partie de la pluralité de deuxièmes pores ;
le premier additif et le deuxième additif comprennent respectivement une charge organique comprenant un polymère contenant un groupe fonctionnel C-O, un polymère contenant un groupe fonctionnel C-Cl, un polymère contenant un groupe fonctionnel C-F, un polymère contenant un groupe fonctionnel C-N, un polymère contenant un groupe fonctionnel C-Si, un polymère contenant un groupe fonctionnel Si-O, ou une combinaison de ceux-ci.

2. Un film de refroidissement radiatif composite selon la revendication 1 dans lequel une fraction volumique de la pluralité de premiers pores dans la première couche émissive (11) est dans une plage de 1% à 20%, et une fraction volumique de la pluralité de deuxièmes pores dans la deuxième couche émissive (12) est dans une plage de 1% à 20%.

3. Un film de refroidissement radiatif composite selon la revendication 1 dans lequel la taille de particule du premier additif est dans une plage de 1 µm à 20 µm ; et/ou
la taille de particule du deuxième additif est dans une plage de 1 nm à 200 nm.

4. Un film de refroidissement radiatif composite selon la revendication 1 dans lequel la fraction volumique du premier additif dans la première couche émissive (11) est dans une plage de 0 à 20%, et la fraction volumique du deuxième additif dans la deuxième couche émissive (12) est dans une plage de 0 à 20% ;
le premier additif et le deuxième additif comprennent en outre respectivement une charge inorganique comprenant des perles de verre, des perles de céramique, des particules d'oxyde de silicium, des particules de carbure de silicium, des particules de nitrure de silicium, des particules de sulfate de baryum, des particules de carbonate de calcium, ou une combinaison de ceux-ci.

5. Un film de refroidissement radiatif composite selon la revendication 1 dans lequel la charge organique comprend du polyéthylène téréphtalate, du polybutylène téréphtalate, du polyéthylène naphtalate, du polycarbonate, du chlorure de polyvinyle, du polyméthacrylate de méthyle, du fluorure de polyvinylidène, du téflon, de l'éthylène-propylène fluoré, du polydiméthylsiloxane, du polyuréthane, ou une combinaison de ceux-ci.

6. Un film de refroidissement radiatif composite selon la revendication 1 dans lequel le premier polymère comprend du poly-4-méthyl-pentène, du poly-4-méthyl-1-pentène, du polyéthylène, du polypropylène, du polystyrène, ou une combinaison de ceux-ci, et le deuxième polymère comprend de la résine acrylique, de la résine polyuréthane, de la résine fluorée, ou une combinaison de ceux-ci.

7. Un film de refroidissement radiatif composite selon la revendication 1 dans lequel le premier polymère comprend un polymère contenant un groupe fonctionnel C-O, un polymère contenant un groupe fonctionnel C-Cl, un polymère contenant un groupe fonctionnel C-F, un polymère contenant un groupe fonctionnel C-N, un polymère contenant un groupe fonctionnel C-Si, un polymère contenant un groupe fonctionnel Si-O, ou une combinaison de ceux-ci.

8. Un film de refroidissement radiatif composite selon la revendication 7 dans lequel le premier polymère comprend du polyéthylène téréphtalate, du polybutylène téréphtalate, du polyéthylène naphtalate, du polycarbonate, du chlorure de polyvinyle, du polyméthacrylate de méthyle, du fluorure de polyvinylidène, du téflon, de l'éthylène-propylène fluoré, du polydiméthylsiloxane, du polyuréthane, ou une combinaison de ceux-ci.

9. Un film de refroidissement radiatif composite selon la revendication 1 dans lequel une pluralité de parties convexes (121) est distribuée sur une surface latérale de la deuxième couche émissive (12) distale de la première couche émissive (11) ;
la hauteur de la pluralité de parties convexes (121) est dans une plage de 1 µm à 100 µm ;
l'épaisseur de la première couche émissive (11) est dans une plage de 10 µm À 300 µm, et l'épaisseur de la deuxième couche émissive (12) est dans une plage de 5 µm à 150 µm.

10. Un film de refroidissement radiatif composite selon la revendication 1 dans lequel la couche réfléchissante (2) comprend une couche réfléchissante métallique (21), et le matériau de la couche réfléchissante métallique (21) comprend l'or, l'argent, l'aluminium, le cuivre, le zinc, ou une combinaison de ceux-ci.

11. Un film de refroidissement radiatif composite selon la revendication 10 dans lequel la couche réfléchissante métallique (21) comprend une première couche réfléchissante métallique (211) adjacente à la couche supérieure (1) et une deuxième couche réfléchissante métallique (212) distale de la couche supérieure (1), le matériau de la première couche réfléchissante métallique (211) est identique ou différent de celui de la deuxième couche réfléchissante métallique (212), l'épaisseur de la première couche réfléchissante métallique (211) est dans une plage de 5 nm à 200 nm, et l'épaisseur de la deuxième couche réfléchissante métallique (212) est dans la plage de 5 nm à 200 nm ;
la couche réfléchissante métallique (21) comprend en outre une couche intermédiaire (213) disposée entre la première couche réfléchissante métallique (211) et la deuxième couche réfléchissante métallique (212).

12. Un film de refroidissement radiatif composite selon la revendication 1 dans lequel
la couche réfléchissante (2) comprend une couche réfléchissante en résine (22) et la couche réfléchissante en résine (22) comprend une pluralité de troisièmes pores (220) ;
la taille de pore de la pluralité des troisièmes pores (220) est dans la plage de 0,2 µm à 20 µm ; l'épaisseur de la couche réfléchissante en résine (22) est dans la plage de 25 µm à 300 µm ;
le matériau de la couche réfléchissante en résine (22) comprend du poly-4-méthyl-pentène, du polyéthylène téréphtalate, du polybutylène téréphtalate, du polyéthylène naphtalate, du copolymère d'acrylonitrile butadiène styrène, du polystyrène, du polypropylène, du polycarbonate, ou une combinaison de ceux-ci.

13. Un film de refroidissement radiatif composite selon la revendication 12 dans lequel la couche réfléchissante en résine (22) comprend une première couche réfléchissante de résine (221), une deuxième couche réfléchissante de résine (222), et une troisième couche réfléchissante de résine (223) qui sont agencées en séquence, et la pluralité de troisièmes pores (220) est distribuée dans la deuxième couche réfléchissante de résine (222) ;
la fraction volumique de la pluralité de troisième pores (220) dans la deuxième couche réfléchissante de résine (222) est dans une plage de 2% à 30%.

14. Un film de refroidissement radiatif composite selon la revendication 1 dans lequel la couche réfléchissante (2) comprend une couche réfléchissante métallique (21) adjacente à la couche supérieure (1) et à la couche réfléchissante en résine (22) distale de la couche supérieure (1).

15. Un ensemble de film de refroidissement radiatif composite formé par le film de refroidissement radiatif composite selon l'une quelconque des revendications 1-14 et un substrat, la couche réfléchissante (2) du film de refroidissement radiatif composite est disposée sur une surface du substrat ;
le substrat comprend du métal, du plastique, du caoutchouc, de l'asphalte, un matériau étanche à l'eau, du béton, du ciment, du textile, du tissu tissé, du bois, du carreau de céramique, un produit en verre, un matériau synthétique organique, ou une combinaison de ceux-ci.

16. Une utilisation du film de refroidissement radiatif composite selon l'une quelconque des revendications 1-14, comprenant :
placer le film de refroidissement radiatif composite sur un corps de dissipation de chaleur ; et
faire communiquer thermiquement le film de refroidissement radiatif composite avec le corps de dissipation de chaleur.
